# EUROPEAN PATENT APPLICATION

(11) **EP 2 775 702 A1**
(43) Date of publication of application: **10.09.2014**
(21) Application number: 14157981.3
(22) Date of filing: 06.03.2014
(51) Int. Cl.: H04N 5/45, H04N 5/76, H04N 21/472, H04N 21/443, H04N 21/431, H04N 21/4147

(54) **Trick play techniques for a picture-in-picture window rendered by a video services receiver**

(30) Priority: 06.03.2013 US 201313787333
(71) Applicant: Eldon Technology Limited, Keighley Yorkshire BD20 6QW (GB)
(72) Inventor: Hall, Neale, Keighley, BD20 0NX (GB)
(74) Representative: Maiwald Patentanwalts GmbH

(57) **Abstract**

A video services receiver and a related method for presenting video content in a picture-in-picture (PIP) window rendered on a display element are presented here. The method involves presenting recorded secondary video content in the PIP window while presenting primary video content in a main area of the display element, resulting in PIP video content. The method continues by receiving a trick play command for the PIP video content, and manipulating presentation of the PIP video content in the PIP window in accordance with the received trick play command. The manipulated PIP video content is presented in the PIP window while concurrently presenting the primary video content in the main area of the display element.

## Description

### TECHNICAL FIELD

Embodiments of the subject matter described herein relate generally to video services systems. More particularly, embodiments of the subject matter relate to systems and methods for controlling the presentation of video content within a picture-in-picture (PIP) window of a display element.

### BACKGROUND

Most television viewers now receive their video signals through a content aggregator such as a cable or satellite television provider. Digital video broadcasting (DVB) systems, such as satellite systems, are generally known. A DVB system that delivers video service to a home will usually include a video services receiver, system, or device, which is commonly known as a set-top box (STB). In the typical instance, encoded television signals are sent via a cable or wireless data link to the viewer's home, where the signals are ultimately decoded in the STB. The decoded signals can then be viewed on a television or other appropriate display as desired by the viewer.

In addition to receiving and demodulating video content (such as television programming), many video services receivers are able to provide additional features. Examples of popular features available in many modem video services receivers include electronic program guides (EPGs), digital video recorders (DVRs), "place-shifting" features for streaming received content over a network or other medium, and/or the ability to simultaneously view multiple programs showing on different channels. In the latter case, a picture-in-picture (PIP) display is typically provided wherein a relatively small image of a secondary program is superimposed upon a primary display. While television viewers have widely adopted PIP functionality, there nevertheless remains a desire to improve the PIP experience.

It is therefore desirable to create systems and methods improving the manner in which video content is rendered and controlled in a PIP window. This, along with other desirable features and characteristics related to a video services system, will become apparent from the subsequent detailed description and the appended claims, taken in conjunction with the accompanying drawings and this background section.

### BRIEF SUMMARY

A method for presenting video content in a picture-in-picture (PIP) window rendered on a display element is presented herein. The method involves the presentation of recorded secondary video content in the PIP window while presenting primary video content in a main area of the display element. The method continues by receiving a trick play command for the PIP video content and manipulating presentation of the PIP video content in the PIP window in accordance with the received trick play command and while presenting the primary video content in the main area of the display element.

Also provided is an embodiment of a video services receiver. The receiver includes a receiver interface to receive data associated with video services, and a display interface for a display element operatively coupled to the video services receiver. The display interface facilitates presentation of video content on the display element. The receiver also includes a processor architecture having at least one processor device. The processor architecture cooperates with the receiver interface and the display element to present primary video content in a main area of the display element, and to present recorded secondary video content in a PIP window of the display element in accordance with a trick play mode, while presenting the primary video content in the main area of the display element.

Also provided is an embodiment of a method of operating a video services receiver to present video content on a display element. The method may begin by presenting primary video content in a main area of the display element. The method continues by presenting secondary video content in a PIP window of the display element, processing a trick play command for the secondary video content, the trick play command designating a trick play mode, and manipulating presentation of the secondary video content in the PIP window in accordance with the designated trick play mode. The method continues by presenting the manipulated PIP video content in the PIP window while presenting the primary video content in the main area of the display element.

Also the following embodiments are provided, which are numbered for easier reference:
1. A method for presenting video content in a picture-in-picture (PIP) window rendered on a display element, the method comprising:
   presenting recorded secondary video content in the PIP window while presenting primary video content in a main area of the display element, resulting in PIP video content;
   receiving a trick play command for the PIP video content; and
   manipulating presentation of the PIP video content in the PIP window in accordance with the received trick play command and while presenting the primary video content in the main area of the display element, resulting in manipulated PIP video content.
2. The method of embodiment 1, wherein the trick play command comprises a fast-forward command.
3. The method of embodiment 1 or 2, wherein the trick play command comprises a rewind command.
4. The method of embodiment 1, 2 or 3, wherein the trick play command comprises a slow motion command.
5. The method of embodiment 1, 2, 3 or 4, wherein the recorded secondary video content is a recorded copy of the primary video content.
6. The method of embodiment 1, 2, 3, 4 or 5, further comprising:
   receiving a switch window command for the PIP video content;
   in response to receiving the switch window command, replacing the primary video content in the main area of the display element with the PIP video content; and
   in response to the replacing, saving a current position of the primary video content as a subsequent playback marker.
7. The method of embodiment 1, 2, 3, 4, 5 or 6, further comprising:
   receiving a switch window command for the PIP video content;
   in response to receiving the switch window command, replacing the primary video content in the main area of the display element with the PIP video content; and
   in response to the replacing, recording the primary video content.
8. A video services receiver comprising:
   a receiver interface to receive data associated with video services;
   a display interface for a display element operatively coupled to the video services receiver, the display interface facilitating presentation of video content on the display element; and
   a processor architecture comprising at least one processor device, wherein the processor architecture cooperates with the receiver interface and the display element to:
      present primary video content in a main area of the display element; and
      present recorded secondary video content in a picture-in-picture (PIP) window of the display element in accordance with a trick play mode, while presenting the primary video content in the main area of the display element.
9. The video services receiver of embodiment 8, wherein the trick play mode is a fast-forward mode.
10. The video services receiver of embodiment 8 or 9, wherein the trick play mode is a rewind mode.
11. The video services receiver of embodiment 8, 9 or 10, wherein the trick play mode is a slow motion mode.
12. The video services receiver of embodiment 8, 9, 10 or 11, wherein the recorded secondary video content is a recorded copy of the primary video content.
13. The video services receiver of embodiment 8, 9, 10, 11 or 12, wherein the processor architecture is further configured to:
   receive a switch window command for the PIP window;
   in response to receiving the switch window command, replace the primary video content in the main area of the display element with the recorded secondary video content; and
   in response to the replacing, save a current position of the primary video content as a subsequent playback marker.
14. The video services receiver of embodiment 8, 9, 10, 11, 12 or 13, wherein the processor architecture is further configured to:
   receive a switch window command for the PIP window;
   in response to receiving the switch window command, replace the primary video content in the main area of the display element with the recorded secondary video content; and
   in response to the replacing, record the primary video content.
15. A method of operating a video services receiver to present video content on a display element, the method comprising:
   presenting primary video content in a main area of the display element;
   presenting secondary video content in a picture-in-picture (PIP) window of the display element;
   processing a trick play command for the secondary video content, the trick play command designating a trick play mode;
   manipulating presentation of the secondary video content in the PIP window in accordance with the designated trick play mode, resulting in manipulated PIP video content; and
   presenting the manipulated PIP video content in the PIP window while presenting the primary video content in the main area of the display element.
16. The method of embodiment 15, wherein the trick play mode comprises a fast-forward mode.
17. The method of embodiment 15 or 16, wherein the trick play mode a rewind mode.
18. The method of embodiment 15, 16 or 17, wherein the trick play mode comprises a slow motion mode.
19. The method of embodiment 15, 16, 17 or 18, wherein the secondary video content is a recorded copy of the primary video content.
20. The method of embodiment 15, 16, 17, 18 or 19, further comprising:
   rendering a recorded program listing on the display element; and
   selecting the secondary video content from the rendered recorded program listing, wherein presenting the secondary video content in the PIP window is performed in response to the selecting.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a simplified schematic representation of an embodiment of a video services system;
FIG. 2 is a simplified schematic representation of an embodiment of a video services receiver device suitable for use in the system shown in FIG. 1; and
FIG. 3 is a flow chart that illustrates an exemplary embodiment of a process for applying a trick play mode in a picture-in-picture window.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The exemplary embodiments described below relate to a video delivery system such as a satellite television system. The disclosed subject matter relates to the presentation of video content within a PIP window that is rendered on a display element. In accordance with established principles, the PIP window can be rendered while primary video content is being presented in the main area of the display element. The techniques and methodologies described herein allow certain trick play modes (e.g., fast-forwarding, rewinding, slow motion, or the like) to be applied to the PIP video content while the primary video content is rendered in the usual manner within the main area of the display.

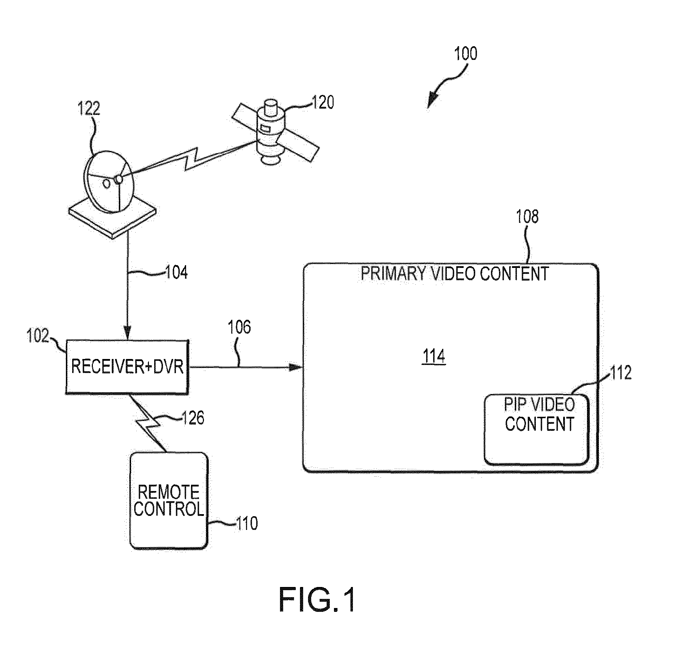

Turning now to the drawings, FIG. 1 is a schematic representation of an embodiment of a video services system 100 that is suitably configured to support the techniques and methodologies described in more detail below. The system 100 (which has been simplified for purposes of illustration) generally includes, without limitation: a video services receiver 102 that receives signals 104 in any any format and generates an appropriate output 106 to generate imagery on a display element 108. The display element 108 is coupled to, integrated with, or otherwise associated with a presentation device (not shown) such as a television set, a home entertainment system, a computer-based system, or the like. Typically, the video services receiver 102 interacts with a wireless remote control 110, which may include any sort of user interface that accommodates the entry of user commands. For example, the remote control 110 may include any number of buttons, switches, touch screen elements, a trackball, a joystick, or the like.

Imagery such as video content is presented on the display element 108 under the control of the video services receiver 102 as desired by the viewer. In various embodiments, a PIP window 112 may be presented overlying a primary or main area 114 of the display element 108 to allow simultaneous viewing of multiple programs. The remote control 110 can be manipulated to open and close the PIP window 112, to move the rendered location of the PIP window 112, to resize or reshape the PIP window 112, to swap the video content rendered in the main area 114 and the PIP window 112, to initiate and control trick play in association with the primary video content rendered in the main area 114, to initiate and control trick play in association with the secondary video content rendered in the PIP window 112, and to otherwise control the features and functions of the video services receiver 102 as needed. In this regard, the remote control 110 may include a cluster or group of user interface elements (physical and/or graphical) that are specifically designed for use with the PIP window 112. In certain embodiments, the remote control 110 may include a number of "multimode" user interface elements (physical and/or graphical) modes that can be used in association with both the main area 114 and the PIP window 112.

The video services receiver 102 is any component, device, or system capable of receiving and decoding the signals 104. In various embodiments, the video services receiver 102 is realized as a piece of hardware equipment deployed in connection with the display element 108 (historically known as a set-top box or STB). In accordance with well-established operating principles, therefore, the video services receiver 102 can receive satellite, cable, broadcast, and/or other video signals that convey encoded audio/visual content. The video services receiver 102 may further demodulate or otherwise decode the received signals 104 to extract programming that can be locally viewed on the display element 108 as desired. The video services receiver 102 may also include a content database stored on a hard disk drive, a tangible memory element, or other storage medium to support DVR functionality (e.g., the recording of video content and the playback of recorded video content). The video services receiver 102 may also provide place shifting, electronic program guide, multi-stream viewing, and/or other features as appropriate.

In the exemplary embodiment illustrated in FIG. 1, the video services receiver 102 is shown receiving digital broadcast satellite (DBS) signals 104 from a satellite 120, by way of an antenna 122. Equivalent embodiments, however, could receive the signals 104 from one or more programming sources, including any sort of satellite, cable, or broadcast source, as well as any Internet or other network source. In embodiments that include DVR functionality, programming may be stored in any sort of database as desired (e.g., in response to user/viewer programming instructions) for subsequent viewing. Content may also be received from digital versatile disks (DVDs) or other removable media in some embodiments.

The display element 108 is any device capable of presenting imagery to a viewer. In various embodiments, the display element 108 is a conventional television set, such as any sort of television operating in accordance with any digital or analog protocols, standards or other formats. The display element 108 may be a conventional NTSC or PAL television receiver, for example. In other embodiments, the display element 108 is a monitor or other device that may not include built-in receiver functionality, but that is nevertheless capable of presenting imagery in response to the output 106 (received from the video services receiver 102). In various embodiments, the video services receiver 102 and the display element 108 may be physically combined or interconnected in any manner. A receiver card, for example, could be inserted into a slot or other interface in a conventional television, or the functionality of the video services receiver 102 may be provided within a conventional television display element 108. In other embodiments, the output 106 are transferred between the video services receiver 102 and the display element 108 using any sort of cable or other interface (including a wireless interface). Examples of common interfaces include, without limitation, component video, S-Video, High-Definition Multimedia Interface (HDMI), Digital Visual Interface (DVI), IEEE 1394, and/or any other formats as desired.

The remote control 110 is any sort of control device capable providing signals 126 to the video services receiver 102, wherein the signals 126 convey or represent inputs received from one or more viewers. In various embodiments, the remote control 110 is an infrared, radio frequency (RF) or other wireless remote that includes any number of buttons or other features for receiving viewer inputs. In an exemplary embodiment, the remote control 110 communicates with the video services receiver 102 using the IEEE 802.15.4 ("ZIGBEE") protocol for wireless personal area networks (WPANs), although other embodiments may instead communicate using IEEE 802.15.1 ("BLUETOOTH"), IEEE 802.11 ("WI-FI"), conventional infrared, and/or any other wireless techniques. As mentioned above, the remote control 110 may include physical user interface elements, graphical user interface elements, a touchpad-type device (to accepts viewer inputs applied with a finger, stylus or other object), or the like.

In operation, the video services receiver 102 receives the signals 104 from a satellite, cable, broadcast or other source. The signals 104 typically encompass multiple channels that can be viewed. In a satellite based embodiment, for example, a primary channel and a secondary channel can be extracted from a common satellite feed. One or more cable or broadcast channels may also be obtained in any manner. In other embodiments, the video services receiver 102 may obtain multiple channel signals from different sources (e.g., one channel from a cable or satellite source and another channel from a terrestrial broadcast, DVD or other source).

The video services receiver 102 suitably obtains the desired content as indicated or selected by the viewer, and presents the video content on the display element 108. In various embodiments, primary and secondary content may be presented on the display element 108. For example, primary video content can be rendered for display in the main area 114, while secondary video content can be rendered for simultaneous display in the PIP window 112.

In various embodiments, the viewer is able to interact with the PIP window 112 in any manner. For example, the viewer may be able to move a cursor or similar pointer rendered on the display element 108 using the remote control 110. By pointing to various interface features that are presented in association with the PIP window 112, the viewer may be able to move, resize or otherwise adjust the PIP window 112 as desired. Although not specifically shown in FIG. 1, icons could be displayed to allow resizing of the PIP window 112, swapping of primary/secondary video content, controlling trick play modes applied to the secondary video content displayed in the PIP window 112, and/or other features as desired. Trick play features and modes for the secondary video content are described in more detail below.

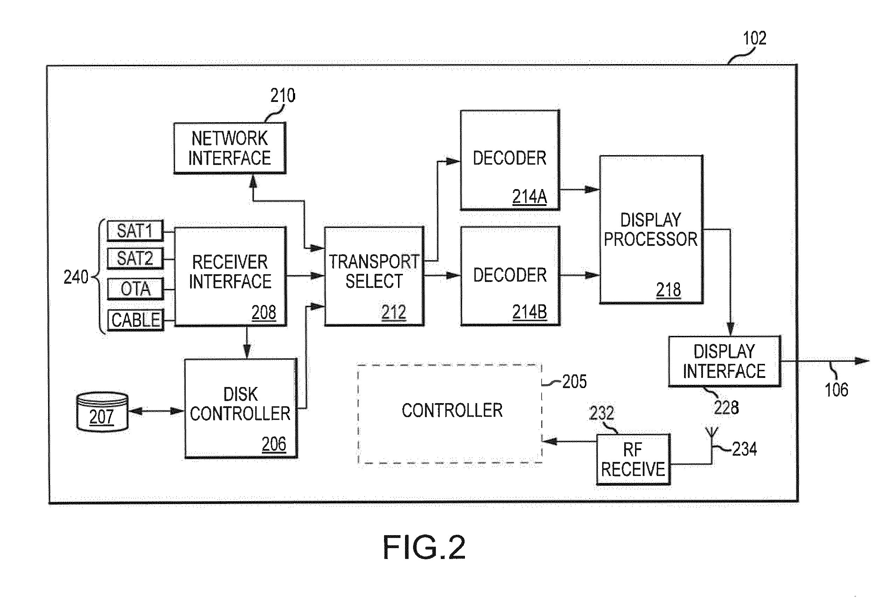

FIG. 2 is a simplified schematic representation of an exemplary embodiment of the video services receiver 102. This particular embodiment generally includes, without limitation: a receiver interface 208, at least one decoder module 214, and a display processor module 218, as appropriate. FIG. 2 also shows a disk controller interface 206 to a disk or other storage device 207, a network interface 210 to a local or wide area network, a transport select module 212, a display interface 228 for a display element, an RF receiver module 232, and control logic 205. Other embodiments may incorporate additional or alternate processing modules from those shown in FIG. 2, may omit one or more modules shown in FIG. 2, and/or may differently organize the various modules in any other manner different from the exemplary arrangement shown in FIG. 2.

The video services receiver 102 may be physically and logically implemented in any manner. FIG. 2 shows various logical and functional features that may be present in an exemplary device, wherein each module shown in the figure may be implemented with any sort of hardware, software, firmware, and/or the like. In this regard, the video services receiver 102 may include a processor architecture having at least one processor device that cooperates with the various modules, elements, and devices of the video services receiver 102 to support the features and functions described herein. Any of the various processing modules may be implemented with any sort of general or special purpose integrated circuitry, for example, such as any sort of microprocessor, microcontroller, digital signal processor, programmed array and/or the like. Any number of the modules shown in FIG. 2, for example, may be implemented as a "system on a chip" (SoC) using any suitable processing circuitry under control of any appropriate control logic 205. In various embodiments, the control logic 205 executes within an integrated SoC or other processor that implements the receiver interface 208, the transport select module 212, the decoder module 214, the display processor 218, the disk controller interface 206, and/or other features, as appropriate. The Broadcom Corporation of Irvine, California, for example, produces several models of processors (e.g., the model BCM 7400 family of processors) that are capable of supporting SoC implementations of satellite and/or cable receiver systems, although products from any number of other suppliers could be equivalently used. In still other embodiments, various distinct chips, circuits or components may be interconnected with each other to implement the receiving and decoding functions represented in FIG. 2.

Various embodiments of the video services receiver 102 therefore include any number of appropriate modules for obtaining and processing media content as desired for the particular embodiment. Each of these modules may be implemented in any combination of hardware and/or software using logic executed within any number of semiconductor chips or other processing logic.

Various embodiments of the control logic 205 can include any circuitry, components, hardware, software and/or firmware logic capable of controlling the various components of the video services receiver 102. Various routines, methods and processes executed within the video services receiver 102 are typically carried out under the control of the control logic 205, as described more fully below. Generally speaking, the control logic 205 receives user input signals 126 (FIG. 1) via the RF receiver module 232, which in turn communicates with the remote control 110 using a suitable antenna 234. The control logic 205 receives user inputs from the remote control 110 and/or any other source, and directs the other components of the video services receiver 102 in response to the received inputs to present the desired imagery on the display element 108.

As noted above, many embodiments of the video services receiver 102 include a receiver interface 208, which is any hardware, software, firmware and/or other logic capable of receiving data associated with video services (e.g., media content data) via one or more content sources 240. In various embodiments, the content sources 240 may include cable television, DBS, broadcast and/or other programming sources as appropriate. The receiver interface 208 appropriately selects a desired input source and provides the received content to an appropriate destination for further processing. In various embodiments, received programming may be provided in real-time (or near real-time) to a transport select module 212 or other component for immediate decoding and presentation to the user. Alternatively, the receiver interface 208 may provide content received from any source to a disk or other storage medium in embodiments that provide DVR functionality. In such embodiments, the video services receiver 102 may also include a disk controller interface 206 that interacts with an internal or external hard disk, memory and/or other storage device 207, which may be suitably configured to store recorded video content in an appropriate database structure.

In the embodiment shown in FIG. 2, the video services receiver 102 also includes an appropriate network interface 210, which operates using any implementation of protocols or other features to support communication by the video services receiver 102 on a network. In various embodiments, the network interface 210 supports conventional LAN, WAN or other protocols (e.g., the TCP/IP or UDP/IP suite of protocols widely used on the Internet) to allow the video services receiver 102 to communicate on the Internet or any other network as desired. The network interface 210 typically interfaces with the network using any sort of LAN adapter hardware, such as a conventional network interface card (NIC) or the like provided within the video services receiver 102.

The transport select module 212 is any hardware and/or software logic capable of selecting a desired media stream from the available sources. In the embodiment shown in FIG. 2, the transport select module 212 is able to generate video signals for presentation on one or more output display interfaces 228. Typically, the transport select module 212 responds to viewer inputs (e.g., via the control logic 205) to simply switch encoded content received from a broadcast, satellite, cable or other source 240 or from the storage device 207 to one or more decoder modules 214.

The video services receiver 102 may include any number of decoder modules 214 for decoding, decompressing, and/or otherwise processing received/stored content as desired. Generally speaking, the decoder modules 214 decompress, decode, and/or otherwise process received content from the transport select module 212 to extract an MPEG or other media stream encoded within the stream. The decoded content can then be processed by one or more display processor modules 218 to create a presentation on the display element 108 (FIG. 1) for the viewer in any appropriate format. FIG. 2 shows two decoder modules 214A, 214B operating on two separate signals from the transport select module 212. In practice, any number of decoder modules 214 may be used, particularly in PIP situations where multiple signals are simultaneously decoded and displayed. Accordingly, the term "decoder" may collectively apply to one or more decoder modules that are able to decode one or more signals for presentation on the display element 108.

The display processor module 218 includes any appropriate hardware, software and/or other logic to create desired screen displays via the display interface 228 as desired. Such displays may include combining signals received from one or more of the decoder modules 214 to facilitate presentation and viewing of one or more channels of video content on a display element. In various embodiments, the display processor module 218 is also able to produce on screen displays (OSDs) for electronic program guide, setup and control, input/output facilitation and/or other features that may vary from embodiment to embodiment. Such displays are not typically contained within the received or stored broadcast stream, but are nevertheless useful to users in interacting with the video services receiver 102. The generated displays, including received/stored content and any other displays may then be presented to one or more output display interfaces 228 in any desired format.

When the viewer requests display of the PIP window 112, for example, the display processor module 218 may be operable to receive the desired imagery from one or more of the decoder modules 214 and to create an image with the imagery from the secondary video content superimposed in the PIP window 112 on the primary video content in the main area 114 of the display element 108. As the video services receiver 102 receives user input signals 126 from the remote control 110, the control logic 205 may direct the display processor module 218 to adjust the manner in which the secondary video content is presented in the PIP window 112 as directed by the viewer. The display processor module 218 therefore directs the presentation of the video content in the PIP window 112 in conjunction with one or more user commands (e.g., trick play control commands), and adjusts the playback characteristics of the secondary video content in response to inputs received from the viewer.

The display processor module 218 produces an output signal encoded in any standard format (e.g., ITU656 format for standard definition television signals or any format for high definition television signals) that can be readily converted to standard and/or high definition television signals at the display interface 228. In other embodiments, the functionality of the display processor module 218 and the display interface 228 may be combined in any manner.

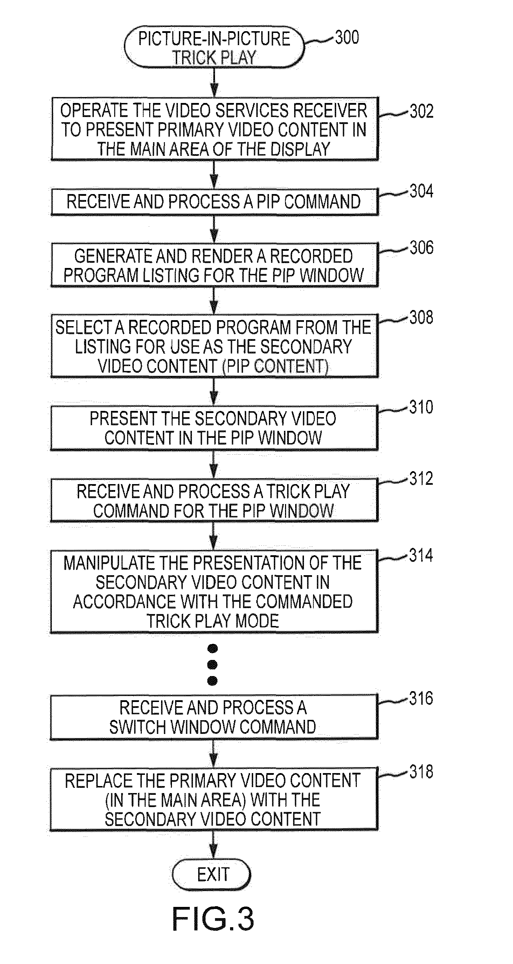

FIG. 3 is a flow chart that illustrates one exemplary embodiment of a PIP trick play process 300 that may be performed to carry out a trick play mode in a PIP window. The various tasks performed in connection with the process 300 may be performed by software, hardware, firmware, or any combination thereof. For illustrative purposes, the following description of the process 300 may refer to elements mentioned above in connection with FIG. 1 and FIG. 2. In practice, portions of the process 300 may be performed by different elements of the described system, e.g., a processor architecture, a display interface, a display processor, a transport selector, or the like. It should be appreciated that the process 300 may include any number of additional or alternative tasks, the tasks shown in FIG. 3 need not be performed in the illustrated order, and the process 300 may be incorporated into a more comprehensive procedure or process having additional functionality not described in detail herein. Moreover, one or more of the tasks shown in FIG. 3 could be omitted from an embodiment of the process 300 as long as the intended overall functionality remains intact.

The process 300 represents one exemplary embodiment of a method for presenting video content in a PIP window rendered on a display element. The illustrated embodiment of the process 300 begins by operating a video services receiver to present primary video content in the main area of a display element (task 302). The corresponding audio content (if any) of the primary video content will be also be generated using the audio playback equipment associated with the video services receiver. The primary video content may be a live (unrecorded) program, recorded video content, streaming media content, or any type of video content that can be obtained and presented by the video services receiver, as described above with reference to FIG. 2.

This example assumes that the process 300 receives and processes a suitably formatted PIP command (task 304) that is intended to launch a PIP window in the display element. In a typical scenario, the PIP command is a viewer-initiated command. In this regard, the PIP command may originate from a remote control device (for example, the remote control may include a devoted "PIP" button or GUI element that generates the PIP command when activated by the viewer). The video services receiver responds to the PIP command by generating and rendering a PIP window on the display element. The PIP window may be superimposed overlying a small portion of the main area of the display (see, for example, FIG. 1).

Secondary video content may be presented in the PIP window in accordance with any number of configuration settings, user preferences, user commands, default settings, memorized "last used" parameters, or the like. For example, the PIP window may be initially "tuned" to the channel or video service that was previously used for the PIP window. As another example, the PIP window may retrieve and begin playback of recorded video content. In some situations, the primary video content may serve as the default video content that is initially rendered in the PIP window. In certain scenarios, the PIP window may be initially rendered as a blank screen, a splash screen, a screen with advertising content, a screen with still image content, a screen with user instructions, a GUI screen, a user menu, an electronic programming guide, a recorded content listing, or the like.

Although not always required, this example assumes that the video services receiver is operated to generate and render a recorded program listing for the PIP window (task 306). The recorded program listing may be launched and rendered on the display element in response to a user-entered command, automatically in response to the PIP command, or in response to the detection of certain operating conditions. The recorded program listing identifies at least some of the recorded programs and content that are stored on the video services receiver (or that are otherwise accessible for viewing via the video services receiver). The recorded program listing enables the user to quickly scan the available recorded video content, view details and information about the recorded content, and select video content (if so desired) for presentation in the PIP window. It should be appreciated that program listings, electronic program guides, and equivalent user interfaces are well known and, therefore, the particular features and functionality of the recorded program listing rendered in association with task 306 will not be described in detail here.

This description assumes that the process 300 selects one of the recorded programs from the program listing for use as secondary video content with the PIP window (task 308). The secondary video content (also referred to herein as "PIP video content") may be selected in response to a user-entered selection or other form of user manipulation with the rendered program listing. It should be appreciated that the secondary video content may be a recorded copy of the primary video content, or it could be a redundant instantiation of the primary video content. For example, the user may be watching a recorded movie as the primary video content, and access the same recorded movie in the PIP window to search for a favorite scene. In such a situation, two versions of the same video content will be presented on the display element.

In response to the selection, the process 300 presents the selected secondary video content in the PIP window (task 310). Notably, the process 300 presents the secondary video content in the PIP window while presenting the primary video content in the main area of the display. In other words, the two videos are presented concurrently on the same display element. In accordance with traditional PIP techniques, the audio (if any) of the secondary video content is muted such that the audio of the primary video content is not interrupted by the PIP video content.

The recorded nature of the secondary video content enables the video services receiver to apply one or more trick play modes to the PIP window. This example assumes that the process 300 receives and processes a suitably formatted trick play command for the PIP video content (task 312). In a typical scenario, the trick play command is a viewer-initiated command, which may originate from a remote control device (for example, the remote control may include one or more trick play activation buttons, which may be intended for use only with the PIP feature, or which may be generally applicable to control trick play modes for primary video content and PIP video content). The video services receiver responds to the trick play command by manipulating the presentation of the PIP video content in the PIP window in accordance with the received trick play command (task 314). The manipulated PIP video content is rendered and presented concurrently with the presentation of the primary video content in the main area of the display element. Regardless of whether the PIP video content is subject to a trick play mode, the primary video content is presented in its normal unaltered format (unless a trick play mode has been independently applied to the primary video content).

The received trick play command includes, conveys, or otherwise designates a trick play mode to be applied to the PIP video content. The trick play mode may include, without limitation, any of the following: a fast-forward mode (at any speed) initiated by a fast-forward command; a rewind mode (at any speed) initiated by a rewind command; a slow motion mode (forward or reverse, and at any speed) initiated by a slow motion command; a pause playback mode initiated by a pause command; a frame advance mode (forward or reverse, advancing by any number of frames) initiated by an advance frame command; a chapter or segment advance mode (forward or reverse, advancing by any number of chapters or segments) initiated by an advance chapter command; or the like. It should be appreciated that it may not be possible to apply all of the available trick play modes to the current PIP video content. For example, if the PIP video content is not divided into detectable chapters or segments, then the chapter/segment advance mode will not be applicable. As another example, if the PIP video content is an unrecorded broadcast or streaming program, then the fast-forward mode will not be applicable.

Although not explicitly shown in FIG. 3, the video services receiver can be controlled in an appropriate manner to manipulate the PIP video content in accordance with more than one trick play mode. For example, the viewer may use the PIP window as a quick searching tool to scan the secondary video content for a particular segment or piece of content. Accordingly, the PIP video content could be manipulated and rendered in the PIP window in accordance with the chapter/segment advance mode, followed by the fast-forward mode, followed by the pause playback mode, followed by the normal playback mode (i.e., no trick play), and then followed by the rewind mode. Of course, this is merely one example of how multiple trick play modes could be applied to the PIP video content. In practice, the secondary video content could be subjected to any number of trick play modes in succession (or, in certain embodiments, in combination) under the control of the user.

This example assumes that the viewer eventually decides to view the secondary video content in the main area of the display. Accordingly, the process 300 may receive and process a switch window command for the PIP video content (task 316). The switch window command may be a viewer-initiated command, which may originate from a remote control device (for example, the remote control may include a "swap windows" button or an "A/B" button). The video services receiver responds to the switch window command by replacing the primary video content with the PIP video content (task 318). In certain embodiments, the PIP window is automatically closed in response to the presentation of the PIP video content (which is now considered to be the "new" primary video content) in the main area. In other embodiments, the PIP window can be used to display the "old" primary video content until the user issues a "Close PIP Window" command, or until the video services receiver is otherwise controlled to close the PIP window.

If playback of the "old" primary video content is terminated, then the video services receiver may save the current position (video location) of the "old" primary video content for use as a subsequent playback marker. Alternatively or additionally, the video services receiver may begin recording the "old" primary video content at or near the current video location, such that the user can resume the viewing at a later date.

The use of trick play modes in the PIP window may also be desirable to find and tag certain segments or sections of the secondary video content, such that the user can quickly jump to those segments while viewing the video content in the main area of the display. Similarly, trick play modes in the PIP window can allow the user to quickly locate and "bookmark" commercial breaks to support an advertisement skipping feature.

Although the embodiments described above are directed to the display and trick play manipulation of video content in one PIP window, the concept can be extended for use with any number of PIP windows rendered in conjunction with a main display area. Moreover, trick play modes in one or more PIP windows could also be supported in a system that renders more than one "main area" of a display. These and other options are contemplated by this disclosure, and the particular implementation described above is not intended to limit or restrict the scope or application of the various trick play techniques and methodologies.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for presenting video content in a picture-in-picture (PIP) window rendered on a display element, the method comprising:
presenting recorded secondary video content in the PIP window while presenting primary video content in a main area of the display element, resulting in PIP video content;
receiving a trick play command for the PIP video content; and
manipulating presentation of the PIP video content in the PIP window in accordance with the received trick play command and while presenting the primary video content in the main area of the display element, resulting in manipulated PIP video content.

2. The method of claim 1, wherein the trick play command comprises a fast-forward command, a rewind command, or a slow motion command.

3. The method of claim 1 or 2, wherein the recorded secondary video content is a recorded copy of the primary video content.

4. The method of claim 1, 2 or 3, further comprising:
receiving a switch window command for the PIP video content;
in response to receiving the switch window command, replacing the primary video content in the main area of the display element with the PIP video content; and
in response to the replacing, saving a current position of the primary video content as a subsequent playback marker.

5. The method of claim 1, 2, 3 or 4, further comprising:
receiving a switch window command for the PIP video content;
in response to receiving the switch window command, replacing the primary video content in the main area of the display element with the PIP video content; and
in response to the replacing, recording the primary video content.

6. The method of claim 1, 2, 3, 4 or 5, further comprising:
rendering a recorded program listing on the display element; and
selecting the recorded secondary video content from the rendered recorded program listing, wherein presenting the recorded secondary video content in the PIP window is performed in response to the selecting.

7. The method of claim 1, 2, 3, 4, 5 or 6, further comprising:
processing the trick play command for the secondary video content, the trick play command designating a trick play mode;
manipulating presentation of the secondary video content in the PIP window in accordance with the designated trick play mode, resulting in manipulated PIP video content; and
presenting the manipulated PIP video content in the PIP window while presenting the primary video content in the main area of the display element.

8. The method of claim 7, further comprising:
rendering a recorded program listing on the display element; and
selecting the secondary video content from the rendered recorded program listing, wherein presenting the secondary video content in the PIP window is performed in response to the selecting.

9. A video services receiver comprising:
a receiver interface to receive data associated with video services;
a display interface for a display element operatively coupled to the video services receiver, the display interface facilitating presentation of video content on the display element; and
a processor architecture comprising at least one processor device, wherein the processor architecture cooperates with the receiver interface and the display element to:
present primary video content in a main area of the display element; and
present recorded secondary video content in a picture-in-picture (PIP) window of the display element in accordance with a trick play mode, while presenting the primary video content in the main area of the display element.

10. The video services receiver of claim 9, wherein the trick play mode is a fast-forward mode, a rewind mode, or a slow motion mode.

11. The video services receiver of claim 9 or 10, wherein the recorded secondary video content is a recorded copy of the primary video content.

12. The video services receiver of claim 9, 10 or 11, wherein the processor architecture is further configured to:
receive a switch window command for the PIP window;
in response to receiving the switch window command, replace the primary video content in the main area of the display element with the recorded secondary video content; and
in response to the replacing, save a current position of the primary video content as a subsequent playback marker.

13. The video services receiver of claim 9, 10, 11 or 12, wherein the processor architecture is further configured to:
receive a switch window command for the PIP window;
in response to receiving the switch window command, replace the primary video content in the main area of the display element with the recorded secondary video content; and
in response to the replacing, record the primary video content.
